(19) Europäisches Patentamt
European Patent Office
Office européen des brevets

(11) Veröffentlichungsnummer: **0 305 886 B1**

(12) # EUROPÄISCHE PATENTSCHRIFT

(45) Veröffentlichungstag der Patentschrift: **29.12.93**

(21) Anmeldenummer: **88113818.4**

(22) Anmeldetag: **25.08.88**

(51) Int. Cl.$^5$: **C09B 67/22**, D06P 3/54, D06P 3/872, //C09B57/00, C09B29/08

(54) **Färbepräparationen von Mischungen roter Dispersionsfarbstoffe für das waschechte Färben von Polyesterfasern oder deren Mischungen mit Zellulosefasern.**

(30) Priorität: **02.09.87 DE 3729323**
**03.10.87 DE 3733505**

(43) Veröffentlichungstag der Anmeldung:
**08.03.89 Patentblatt 89/10**

(45) Bekanntmachung des Hinweises auf die Patenterteilung:
**29.12.93 Patentblatt 93/52**

(84) Benannte Vertragsstaaten:
**BE CH DE ES FR GB IT LI**

(56) Entgegenhaltungen:
**EP-A- 0 208 211**
**FR-A- 2 343 785**
**GB-A- 2 060 672**

(73) Patentinhaber: **HOECHST AKTIENGESELL-SCHAFT**

**D-65926 Frankfurt(DE)**

(72) Erfinder: **Hähnke, Manfred, Dr.**
**Behringstrasse 13**
**D-6233 Kelkheim (Taunus)(DE)**
Erfinder: **Kühn, Reinhard**
**Heinrich-Bleicher-Strasse 39**
**D-6000 Frankfurt am Main 50(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die vorliegende Erfindung betrifft Färbepräparationen in fester oder flüssiger Form von Mischungen aus roten Dispersionsfarbstoffen für das waschechte Färben von Polyesterfasern oder deren Mischungen mit Zellulosefasern.

An textile Materialien, speziell an Artikel aus Polyesterfasern und deren Mischungen mit Zellulosefasern, werden nach modernen Gebrauchsgepflogenheiten hohe Waschechtheitsanforderungen gestellt. Wenn diese Materialien mit Kunstharzen und/oder Weichmachern hochveredelt werden, oder wenn mit Weichmachern behandelte Materialien bei Raumtemperatur längere Zeit gelagert werden, gelingt es nach dem heutigen Stand der Technik kaum, eine befriedigende Waschechtheit zu erzielen. Das als Begleitmaterial bei der Waschechtheitsprüfung üblicherweise verwendete Mehrfaserband zeigt stets ein starkes Anbluten, wobei dies besonders für dessen Zelluloseacetatfaser- und Polyamidfaseranteile gilt. Die genannte Problematik besteht insbesondere bei Rotfarbtönen.

Es sind rote Dispersionsfarbstoffe bekannt, welche beim Färben von Polyesterfasern gute Echtheitsresultate bringen, die aber unter den praxisüblichen Bedingungen der HT-Ausziehfärberei, der Thermosol-Färberei und des Drucks mit HT-Dampf nur zu niedrigen Farbtiefen führen bzw. die bei der HT-Ausziehfärberei (besonders bei tiefen Farbtönen) nicht in einer färbestabilen Feinverteilung gehalten werden können und folglich zu Flecken, Abfiltrationen und Unegalität führen, und die sowohl bei der HT-Ausziehfärberei als auch bei der Thermosol-Färberei und beim Druck zu keiner guten Farbstoffausbeute bzw. Färbebaderschöpfung führen.

Hierzu gehören Farbstoffe der nachfolgend genannten Konstitutionstypen I und II:

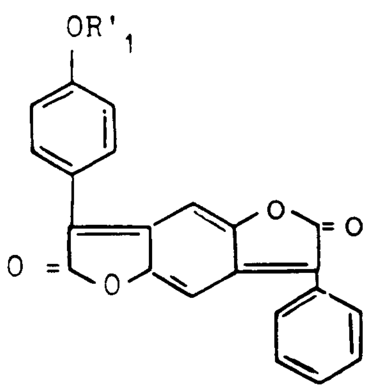

I

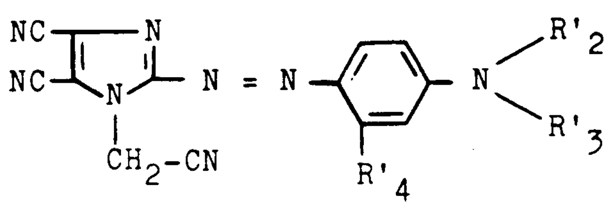

II

Farbstoffe des genannten Typs I sind in der Britischen Patentanmeldung Nr. 20 68 402 beschrieben. $R'_1$ bedeutet in der genannten allgemeinen Formel des Typs I eine niedrige Alkylgruppe.

Die Farbstoffe des genannten Typs II sind in der DE-OS 30 35 912 (GB 20 60 672) beschrieben.In der genannten allgemeinen Formel des Typs II bedeuten $R'_2$und $R'_3$gleiche oder verschiedene Alkylgruppen und $R'_4$ ein Wasserstoff-, Chlor- oder Bromatom oder eine Alkylgruppe.

Es wurde nun überraschenderweise gefunden, daß man durch Mischen von Farbstoffen der genannten Typen I und II zu Färbepräparationen von unerwartet guten Färbeeigenschaften und sehr guten Echtheitsresultaten beim Färben von Polyesterfasern oder deren Mischungen mit Zellulosefasern gelangt, sofern die Farbstoffe, gemeinsam oder separat in Gegenwart von Dispergiermitteln einer Nassmahlung (Finish) unterworfen, als Mischung zur Färbung verwendet werden.

Gegenstand der vorliegenden Erfindung sind daher Färbepräparationen in fester oder flüssiger Form, enthaltend einen oder mehrere rote Dispersionsfarbstoffe der allgemeinen Formel (1)

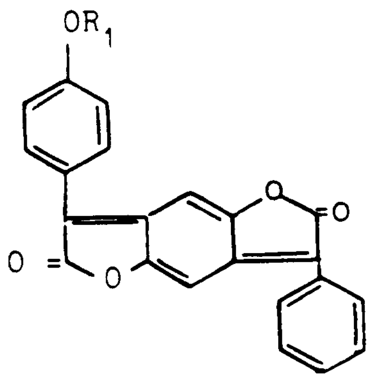

(1)

in welcher $R_1$ eine Alkylgruppe von 1 bis 4 Kohlenstoffatomen bedeuten, und einem oder mehreren roten Dispersionsfarbstoffen der allgemeinen Formel (2)

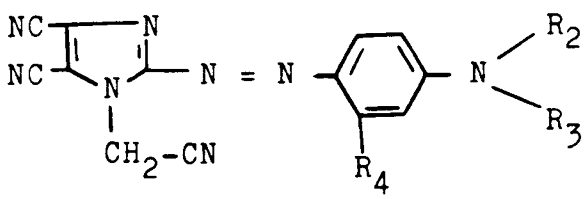

(2)

in welcher $R_2$ und $R_3$ unabhängig voneinander die Gruppe $-CH_2-CH_2-CH_2-COOCH_3$ oder $-CH_2-CH_2-CH_2-COOC_2H_5$, und $R_4$ ein Wasserstoff-, Chlor- oder Bromatom oder die Methylgruppe bedeuten, einem oder mehreren anionaktiven oder nichtionischen Dispergiermitteln und gegebenenfalls Wasser, wobei, bezogen auf das Mischungsverhältnis der Reinfarbstoffe zueinander, die Farbstoffe der Formel (1) zu 15 bis 85 Gewichtsprozent, die Farbstoffe der Formel (2) zu 85 bis 15 Gewichtsprozent enthalten sind, und wobei die Farbstoffe durch gemeinsame oder separate Nassvermahlung in Gegenwart eines Dispergiermittels in hohe Feinverteilung gebracht worden sind.

Bevorzugt sind Färbepräparationen, die einen oder mehrere rote Dispersionsfarbstoffe der allgemeinen Formel (3)

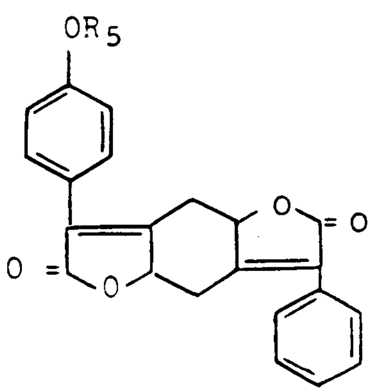

(3)

in welcher $R_5$ eine Alkylgruppe von 1 bis 4 Kohlenstoffatomen bedeutet, und einen oder mehrere rote Dispersionsfarbstoffe der allgemeinen Formel (4)

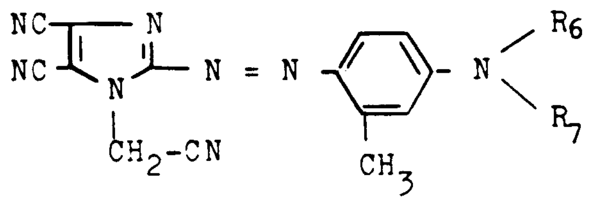

(4)

in welcher $R_6$ eine Ethyl-, n-Propyl- oder n-Butylgruppe und $R_7$ die Gruppe $-CH_2-CH_2-CH_2-COOCH_3$ oder $-CH_2-CH_2-CH_2-COOC_2H_5$ bedeuten, enthalten wobei, bezogen auf das Mischungsverhältnis der Reinfarbstoffe zueinander, die Farbstoffe der Formel (3) zu 30 bis 70 Gewichtsprozent, die Farbstoffe der Formel (4) zu 70 bis 30 Gewichtsprozent vorliegen.

Besonders bevorzugt sind Färbepräparationen, die den roten Dispersionsfarbstoff der Formel (5)

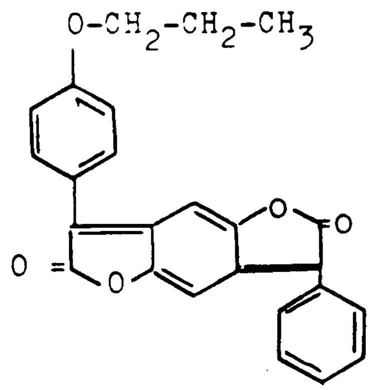

(5)

und den roten Dispersionsfarbstoff der Formel (6)

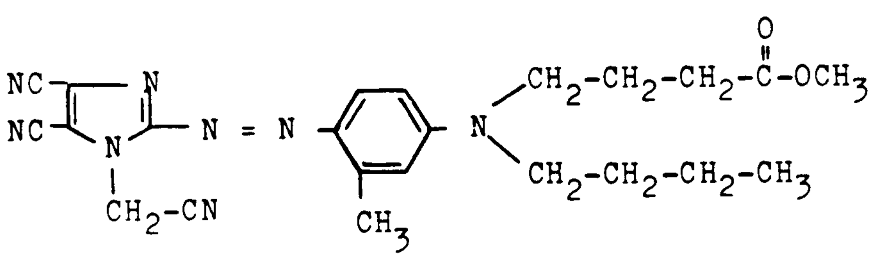

(6)

enthalten, wobei, bezogen auf das Mischungsverhältnis der beiden Reinfarbstoffe zueinander, Farbstoff (5) zu 30 bis 70 Gewichtsprozent, Farbstoff (6) zu 70 bis 30 Gewichtsprozent vorliegt.

Die erfindungsgemäßen Färbepräparationen, welche die genannten Farbstoffmischungen enthalten, können zusätzlich geringe Mengen an weiteren Dispersionsfarbstoffen anderer chemischer Konstitution als Nuancierfarbstoffe enthalten.

Die in den erfindungsgemäßen Färbepräparationen enthaltenen Dispergiermittel können beliebige anionaktive oder nichtionogene Dispergiermittel, wie sie in großer Zahl im Handel sind, sein. Auch Mischungen aus Dispergiermitteln der genannten Art können zugegen sein. Beispielsweise seien Kresol-Formaldehyd-Kondensationsprodukte und Ligninsulfonate genannt. Hinsichtlich der zahlreichen Dispergiermittel der genannten Kategorien sei auf das "Lehrbuch der Textilchemie" von Hermann Rath, Springer-Verlag, zweite Auflage, 1963, Seiten 656-672, verwiesen.

Die Anwendung der erfindungsgemäßen Färbepräparationen erfolgt insbesondere nach dem HT-Ausziehverfahren auf Polyesterfasern oder deren Mischungen mit Zellulosefasern; sie kann aber auch nach dem Thermosol-Verfahren oder im Druck unter Anwendung von HT-Dampf erfolgen.

Die erfindungsgemäßen Färbeverfahren mit den genannten Farbstoffmischungen führen beim HT-Ausziehverfahren bei den üblicherweise verwendeten Färbetemperaturen von 125-135 °C zu sehr guten

Farbausbeuten, zu hohen Farbtiefen und zu fleckenfreien, egalen Färbungen. Beim Thermosol-Verfahren mit Temperaturen zwischen 190 und 220 °C und beim Druck mit HT-Dampf erhält man ebenfalls eine hohe Farbausbeute und hohe Farbtiefen.

Mit den erfindungsgemäßen Färbepräparationen erhält man sowohl auf Polyesterfasern als auch auf Mischungen aus Polyester- und Zellulosefasern hervorragende Waschechtheitsergebnisse.

Die nachstehenden Beispiele dienen der Erläuterung der Erfindung ohne sie darauf zu beschränken. Teile und Prozente bedeuten Gewichtsteile und Gewichtsprozente.

**Beispiel 1**

Um die heutzutage üblichen Veredlungs- und Gebrauchsgepflogenheiten zu charakterisieren und um die erzielbaren Waschechtheitsergebnisse bewerten zu können, werden in diesem Beispiel in einer vergleichenden Serie einige typische Praxissituationen dargestellt, wie sie mit bisher bekannten Farbstoffen gegeben sind:

Ein textiles Gewebe, bestehend aus 65 % Polyesterfasern und 35 % Baumwolle, wird im HT-Ausziehverfahren auf einer Jet-Färbeanlage gefärbt mit

a) 2 % des roten Dispersionsfarbstoffs der Formel

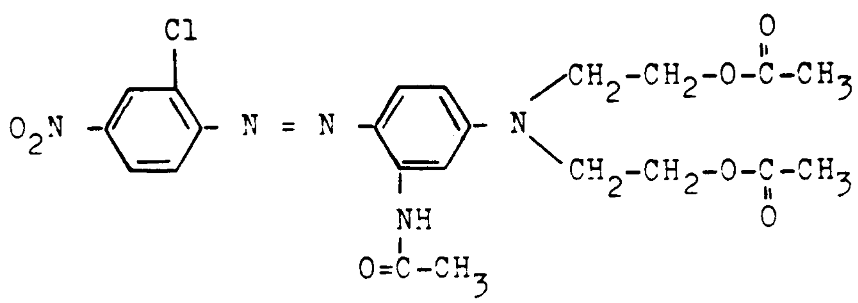

in handelsüblicher Form,

b) 1,5 % des roten Dispersionsfarbstoffs der Formel

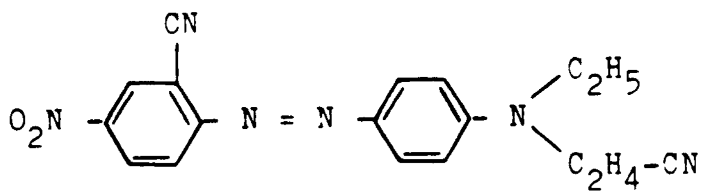

in handelsüblicher Form,

c) 3 % des roten Dispersionsfarbstoffe der Formel

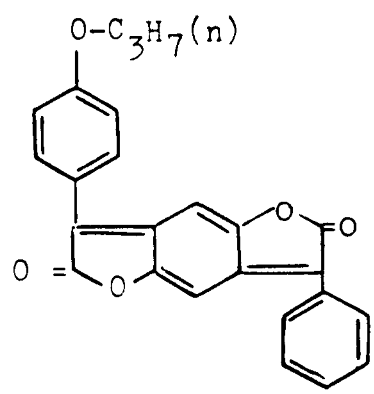

in handelsüblicher Form, bzw. mit

d) 2 % des roten Dispersionsfarbstoffs der Formel

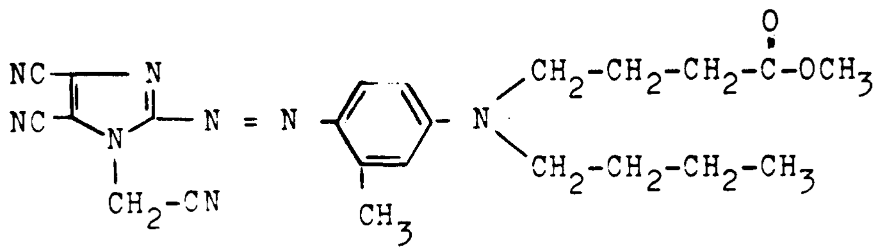

in handelsüblicher Form.

Die Färbungen werden, wie üblich, durch Spülen und durch reduktive Reinigung mit Hydrosulfit/Natronlauge fertiggestellt.

Nach dem Trocknen wird eine Hochveredlung unter Verwendung eines handelsüblichen Glyoxal-Harnstoff-Harzes, eines handelsüblichen Fixierkatalysators und eines handelsüblichen nichtionogenen Weichmachers vorgenommen. Die erhaltenen Färbungen werden folgenden Echtheitsprüfungen unterworden:

Waschechtheitsprüfung gemäß DIN 54017/C2 (30 Minuten bei 60°C im Flottenverhältnis 1:50 mit 4 g/l ECE-Waschmittel (d.h. eines normgerechten Waschmittels) und 1 g/l Natriumperborat sowie mit Mehrfaserband als Begleitmaterial). Wasserechtheitsprüfung gemäß DIN 54006 (mit Mehrfaserband als Begleitmaterial).

Die Auswertung der erhaltenen Färbungen und Echtheiten ergibt folgendes Resultat:

a) Erschöpfung des Färbebades zu 90 %, Melange in tiefem, blaustichigem Rotton mit guter Egalität und mit folgenden ungenügenden Echtheitseigenschaften (Note 1 = schlecht, Note 5 = sehr gut):

| | | Waschechtheit | Wasserechtheit |
|---|---|---|---|
| Mehrfaserband-Anteil | CA* | 2 | 3 |
| | Co | 3 | 3 |
| | PA | 1-2 | 2 |
| | PES | 5 | 4 |
| | PAC | 5 | 4 |
| | Wo | 4 | 4 |

*) CA = Zellulose-$2\frac{1}{2}$-Acetat, Co = Baumwolle, PA = Polyamid-6,6, PES = Polyester, PAC = Polyacrylnitril, Wo = Wolle

b) Erschöpfung des Färbebades zu 95 %, Melange in tiefem Rubinton mit guter Egalität und mit folgenden ungenügenden Echtheitseigenschaften:

| | | Waschechtheit | Wasserechtheit |
|---|---|---|---|
| Mehrfaserband-Anteil | CA | 1-2 | 3 |
| | Co | 3 | 2 |
| | PA | 1 | 2 |
| | PES | 4-5 | 4 |
| | PAC | 4-5 | 4 |
| | Wo | 4-5 | 4 |

c) Erschöpfung des Färbebades zu 55 %, Melange in farbschwachem Rotton mit Flecken/Längsstreifen und mit folgenden guten Echtheitseigenschaften:

| | | Waschechtheit | Wasserechtheit |
|---|---|---|---|
| Mehrfaserband-Anteil | CA | 4-5 | 5 |
| | Co | 5 | 5 |
| | PA | 4-5 | 4-5 |
| | PES | 5 | 5 |
| | PAC | 5 | 5 |
| | Wo | 5 | 5 |

d) Erschöpfung des Färbebades zu 60 %, Melange in mäßig starkem Rotton und mit folgenden mittleren bis guten Echtheitseigenschaften:

| | | Waschechtheit | Wasserechtheit |
|---|---|---|---|
| Mehrfaserband-Anteil | CA | 4 | 3-4 |
| | Co | 4-5 | 4 |
| | PA | 4 | 3 |
| | PES | 5 | 4-5 |
| | PAC | 5 | 4-5 |
| | Wo | 4-5 | 4-5 |

**Beispiel 2**

50 Teile des Farbstoffs der Formel

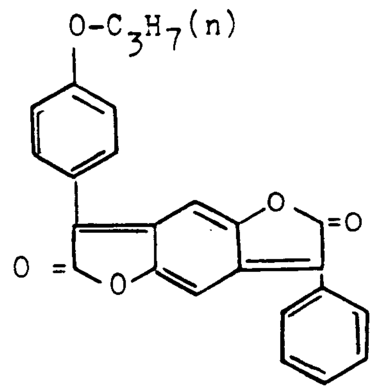

in handelsüblicher Form (bestehend aus etwa 30 Gewichtsprozent Reinfarbstoff und etwa 70 Gewichtprozent eines anionischen Dispergiermittels des Typs Ligninsulfonat) und 50 Teile des Farbstoffs der Formel

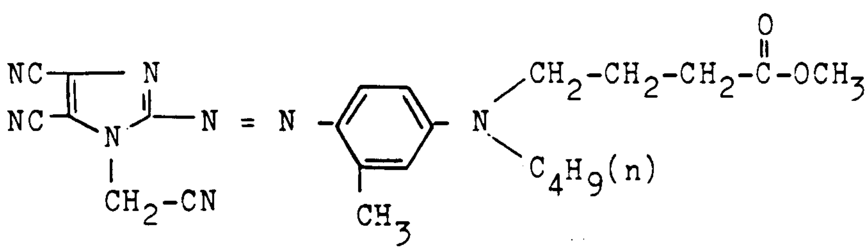

in handelsüblicher Form (bestehend aus etwa 30 Gewichtsprozent Reinfarbstoff und etwa 70 Gewichtsprozent des gleichen obengenannten anionischen Dispergiermittels) werden im Mischer gemischt. 3 Teile der erhaltenen Mischung werden zur Färbung von 100 Teilen eines Polyesterfaser-Garnes nach dem Ausziehfärbeverfahren bei 130 °C verwendet, wobei man eine 96%ige Erschöpfung des Färbebades erhält. Die Färbung wird, wie üblich, reduktiv gereinigt, durch Behandeln mit einem 20 g/l kationaktiven Weichmacher des Typs Fettamin-Oxethylat enthaltenden Bad nachbehandelt und bei 102-105 °C getrocknet. Man erhält eine Färbung von sehr guter Wasch- und Wasserechtheit:

| | | Waschechtheit | Wasserechtheit |
|---|---|---|---|
| Mehrfaserband-Anteil | CA | 4-5 | 4-5 |
| | Co | 5 | 4-5 |
| | PA | 4-5 | 4-5 |
| | PES | 5 | 5 |
| | PAC | 5 | 5 |
| | Wo | 5 | 5 |

(Die beiden in handelsüblicher Form eingesetzten Farbstoffe waren durch Perlmahlung der Reinfarbstoffe in Gegenwart der in der Handelsform enthaltenen Dispergiermittel hergestellt worden.)

**Beispiel 3**

12 Teile des Farbstoffs der Formel

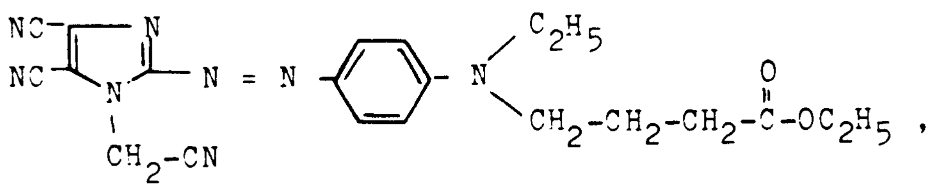

12 Teile des Farbstoffs der Formel

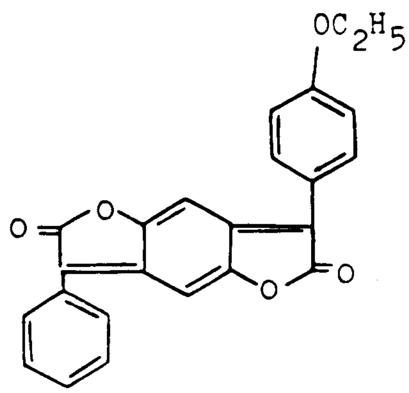

und
12 Teile des Farbstoffs der Formel

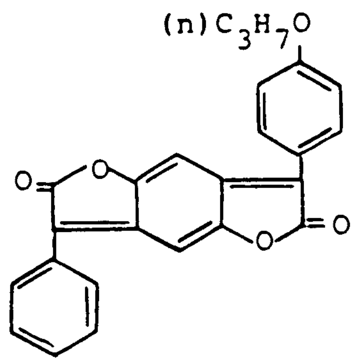

werden zusammen mit 64 Teilen eines handelsüblichen Dispergiermittels aus der Reihe der Ligninsulfonate und 200 Teilen Wasser in einer Perlmühle in eine feinverteilte, stabile Farbstoffdispersion gebracht, welche anschließend durch Sprühtrocknung in ein Farbpulver überführt wird. Die Applikation dieser Präparation auf ein Mischgewebe aus Polyester- und Zellulosefasern nach dem HT-Ausziehverfahren führt zu einer sehr hohen Baderschöpfung und zu einer egalen und hochechten Färbung.

**Beispiel 4**

Durch gemeinsame Perlmahlung von 70 Teilen des Farbstoffs der Formel

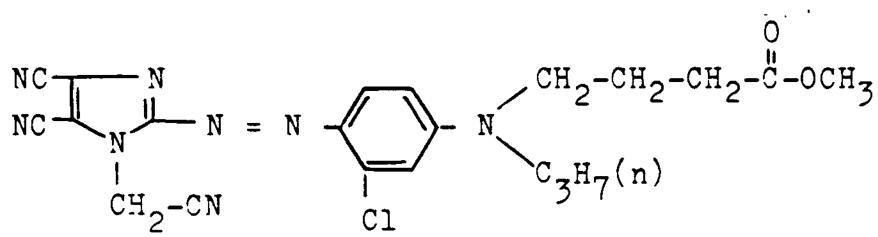

und 30 Teilen des Farbstoffs der Formel

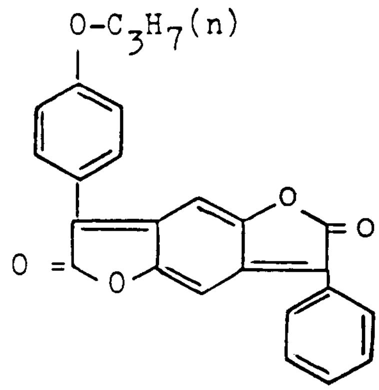

in Gegenwart von 150 Teilen eines handelsüblichen Dispergiermittels vom Typ eines Kresol-Formaldehyd-Kondensationsprodukts und 400 Teilen Wasser wird eine flüssige Farbstoffdispersion hergestellt.

Aus dieser Farbstoffdispersion stellt man folgende Färbeflotte her:
60 g/l Farbstoffdispersion, wie oben beschrieben,
15 g/l handelsübliches Antimigrationsmittel (Polyacrylat-Typ),
2 g/l handelsübliches Netzmittel,
Einstellung des pH 5 durch Essigsäure-Zusatz.

Ein Gewebe, bestehend aus einer Mischung aus 60 % Polyester-Stapelfaser und 40 % Baumwolle wird bei Raumtemperatur mit der vorstehend genannten Färbeflotte bei einer Flottenaufnahme von 60 % geklotzt. Dann wird das Gewebe bei 110 °C getrocknet und anschließend 60 Sekunden bei 220 °C thermosoliert. Nachfolgend wird mit einer reduktiven Nachbehandlung und mit einer Überfärbung des Baumwollanteils mit handelsüblichen Reaktivfarbstoffen in bekannter Weise fertiggestellt. Man erhält bei bestmöglicher Farbstoffausbeute eine tiefe Rotfärbung mit sehr guten Echtheiten.

**Beispiel 5** (Vergleichsbeispiel zu Beispiel 4)

Färbt man nicht mit der gemäß Beispiel 4 zur Anwendung gelangenden Farbstoffpräparation, welche die der gemeinsamen Perlmahlung unterworfene Farbstoffmischung enthält, sondern jeweils mit einem der dort beschriebenen Farbstoff allein, wobei die beiden Einzelfarbstoffe jeweils für sich der dort beschriebenen Perlmahlung in Gegenwart des dort genannten Dispergiermittels unterworfen wurden, so erhält man, wenn man im übrigen wie in Beispiel 4 beschrieben färbt, auf dem dort genannten Mischgewebe nur farbschwache Färbungen.

**Beispiele 6 bis 14**

Stellt man unter Verwendung der in der nachstehenden Tabelle angegebenen Mengen (in Teilen) an Farbstoffen der Formeln (7) und (8)

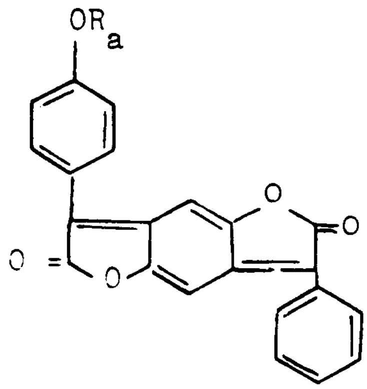

(7)

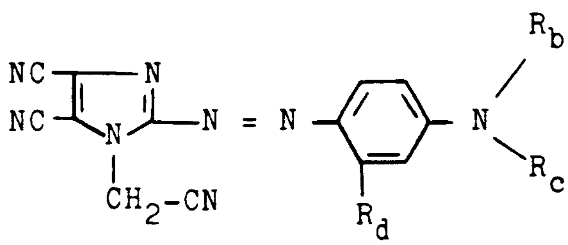

(8)

und handelsüblichem Dispergiermittel auf Basis eines Ligninsulfonats Farbstoffpräparationen her, so erhält man auf Polyesterfasern oder deren Mischungen mit Zellulosefasern ebenfalls tiefe Rotfärbungen von sehr guten Echtheitseigenschaften.

| Bsp. | Menge an Dispergiermittel | Mengen an Farbstoffen (7) und (8) | | Konstitution der Farbstoffe (7) und (8) |
|---|---|---|---|---|
| 6 | 150 | 85 | (7) | $R_a = -CH_3$ |
| | | 15 | (8) | $R_b = R_c = -C_2H_5$, $R_d = -CH_3$ |
| 7 | 120 | 15 | (7) | $R_a = -C_2H_5$ |
| | | 85 | (8) | $R_b = -C_2H_5$, |
| | | | | $R_c = -CH_2-CH_2-CH_2-COOCH_3$ |
| | | | | $R_d = -CH_3$ |
| 8 | 200 | 50 | (7) | $R_a = -nC_3H_7$ |
| | | 25 | (8) | $R_b = R_c = -nC_4H_9$, $R_d = H$ |
| | | 25 | (8) | $R_b = R_c = -nC_4H_9$, $R_d = Br$ |

| Bsp. | Menge an Dispergiermittel | Mengen an Farbstoffen (7) und (8) | | Konstitution der Farbstoffe (7) und (8) |
|---|---|---|---|---|
| 9 | 140 | 30 | (7) | $R_a = -CH_3$ |
| | | 70 | (8) | $R_b = R_c = -nC_4H_9$, $R_d = -CH_3$ |
| 10 | 150 | 50 | (7) | $R_a = -nC_4H_9$ |
| | | 50 | (8) | $R_b = R_c = -nC_4H_9$, $R_d = Cl$ |
| 11 | 170 | 40 | (7) | $R_a = -C_2H_5$ |
| | | 60 | (8) | $R_b = -C_2H_5$, |
| | | | | $R_c = -CH_2-CH_2-CH_2-COOCH_3$ |
| | | | | $R_d = -CH_3$ |
| 12 | 120 | 20 | (7) | $R_a = -CH_3$ |
| | | 20 | (7) | $R_a = -C_2H_5$ |
| | | 20 | (7) | $R_a = -nC_3H_7$ |
| | | 40 | (8) | $R_b = -nC_4H_9$, |
| | | | | $R_c = -CH_2-CH_2-CH_2-COOC_2H_5$ |
| | | | | $R_d = -CH_3$ |
| 13 | 130 | 40 | (7) | $R_a = -CH_3$, |
| | | 20 | (8) | $R_b = R_c = -C_2H_5$, $R_d = H$ |
| | | 20 | (8) | $R_b = R_c = -nC_2H_5$, $R_d = -CH_3$ |
| | | 20 | (8) | $R_b = R_c = -C_2H_5$, $R_d = Cl$ |
| 14 | 150 | 25 | (7) | $R_a = -C_2H_5$ |
| | | 25 | (7) | $R_a = -CH_3$ |
| | | 25 | (8) | $R_b = -nC_4H_9$, |
| | | | | $R_c = -CH_2-CH_2-CH_2-COOCH_3$ |
| | | | | $R_d = -CH_3$ |
| | | 25 | (8) | $R_b = -nC_4H_9$, |
| | | | | $R_c = -CH_2-CH_2-CH_2-COOCH_3$ |
| | | | | $R_d = H$ |

**Beispiel 15**

Mit der gemäß Beispiel 3 hergestellten Farbstoffpräparation wird eine Färbespule mit 2,2 kg Polyestergarn unter Einhaltung der nachstehenden Färbeparameter gefärbt:
Flotten-Zirkulation wechselseitig innen/außen je 2 Minuten,
Flottenverhältnis 1:15,
Dispergiermittel (handelsüblich): 1 g/l,
Natriumacetat krist.: 2 g/l,

Essigsäure 60 %ig: 3 ml/l,
Farbstoffpräparation: 3 %,
Dispers-Rot C.I. 167:1 (handelsübliche Form): 0,5 %,
Temperatur bei Färbebeginn: 70 °C,
Aufheizen auf 130 °C innerhalb 30 Minuten,
Färbetemperatur und -zeit: 130 °C 40 Minuten,
Fertigstellen durch Abkühlen, Spülen, kochendes Seifen.

Man erhält ein tief rotgefärbtes Garn von völliger Egalität und hohen Naßechtheiten.

**Beispiel 16** (Vergleichsbeispiel zu Beispiel 15)

Färbt man, wie in Beispiel 15 beschrieben, jedoch statt mit der gemäß Beispiel 3 hergestellten Farbstoffpräparation mit der auf analoge Weise aus 36 Teilen des Dispersionsfarbstoffs der Formel

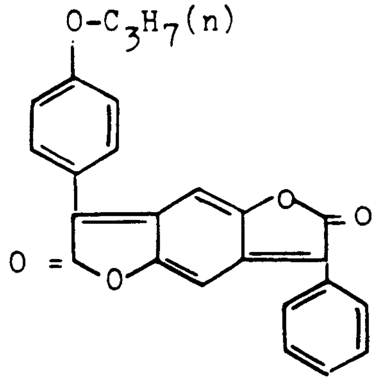

und 64 Teilen des gleichen Dispergiermittels (auf Basis Ligninsulfonat) hergestellten Farbstoffpräparation, so erhält man eine Polyester-Garn-Färbung mit starker Unegalität und starken Farbstoffablagerungen an den Innen-und Außenlagen sowie an der Stirnfläche der Spule.

**Patentansprüche**
**Patentansprüche für folgende Vertragsstaaten : BE, CH, DE, FR, GB, IT, LI**

1. Färbepräparationen in fester oder flüssiger Form, enthaltend einen oder mehrere rote Dispersionsfarbstoffe der allgemeinen Formel (1)

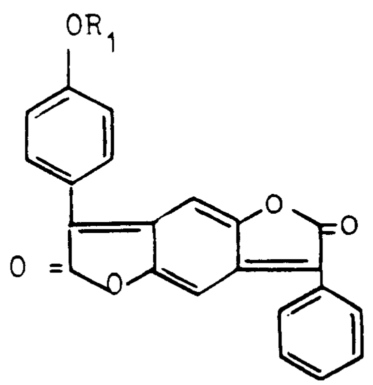

(1)

in welcher $R_1$ eine Alkylgruppe von 1 bis 4 Kohlenstoffatomen bedeutet, und einem oder mehreren roten Dispersionsfarbstoffen der allgemeinen Formel (2)

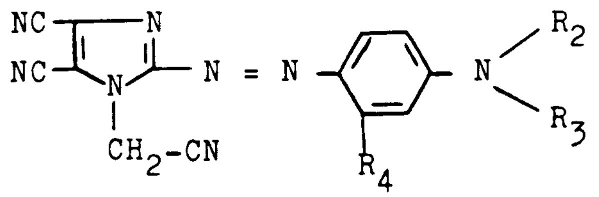

(2)

in welcher $R_2$ und $R_3$ unabhängig voneinander die Gruppe $-CH_2-CH_2-CH_2-COOCH_3$ oder $-CH_2-CH_2-CH_2-COOC_2H_5$, und $R_4$ ein Wasserstoff-, Chlor- oder Bromatom oder die Methylgruppe bedeuten, einem oder mehreren anionaktiven oder nichtionischen Dispergiermitteln und gegebenenfalls Wasser, wobei, bezogen auf das Mischungsverhältnis der Reinfarbstoffe zueinander, die Farbstoffe der Formel (1) zu 15 bis 85 Gewichtsprozent, die Farbstoffe der Formel (2) zu 85 bis 15 Gewichtsprozent enthalten sind, und wobei die Farbstoffe durch gemeinsame oder separate Nassvermahlung in Gegenwart eines Dispergiermittels in hohe Feinverteilung gebracht worden sind.

**2.** Färbepräparationen gemäß Anspruch 1, dadurch gekennzeichnet, daß sie einen oder mehrere rote Dispersionsfarbstoffe der allgemeinen Formel (3)

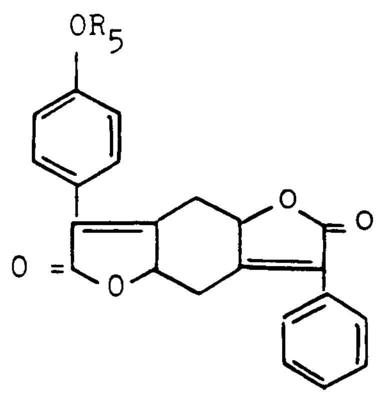

(3)

in welcher $R_5$ eine Alkylgruppe von 1 bis 4 Kohlenstoffatomen bedeutet, und einen oder mehrere rote Dispersionsfarbstoffe der allgemeinen Formel (4)

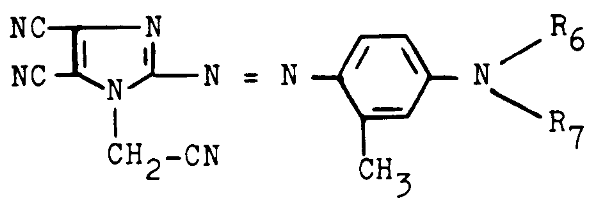

(4)

in welcher $R_6$ eine Ethyl-, n-Propyl- oder n-Butylgruppe und $R_7$ die Gruppe $-CH_2-CH_2-CH_2-COOCH_3$ oder $-CH_2-CH_2-CH_2-COOC_2H_5$ bedeuten, enthalten, wobei, bezogen auf das Mischungsverhältnis der Reinfarbstoffe zueinander, die Farbstoffe der Formel (3) zu 30 bis 70 Gewichtsprozent, die Farbstoffe der Formel (4) zu 70 bis 30 Gewichtsprozent vorliegen.

**3.** Färbepräparationen gemäß Anspruch 1, dadurch gekennzeichnet, daß sie den roten Dispersionsfarbstoff der Formel (5)

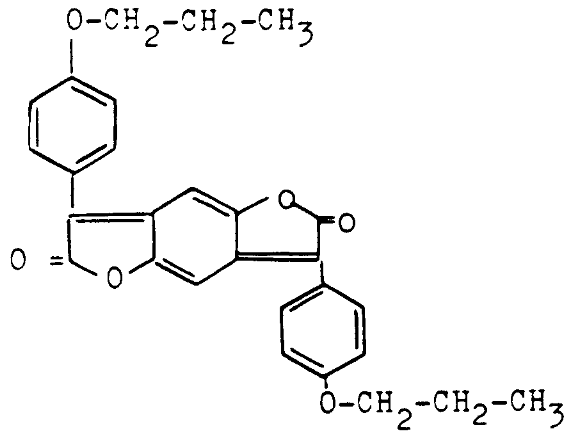

(5)

und den roten Dispersionsfarbstoff der Formel (6)

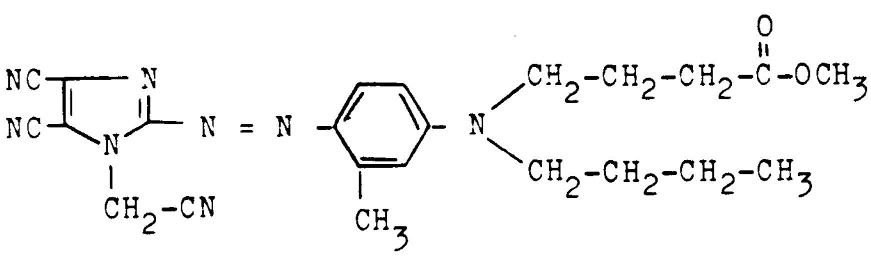

(6)

enthalten, wobei, bezogen auf das Mischungsverhältnis der beiden Reinfarbstoffe (5) und (6) zueinander, Farbstoff (5) zu 30 bis 70 Gewichtsprozent, Farbstoff (6) zu 70 bis 30 Gewichtsprozent vorliegt.

**4.** Verwendung der Färbepräparationen gemäß Ansprüchen 1, 2 oder 3 zum Färben oder Bedrucken von Polyesterfasern oder Mischungen aus Polyesterfasern und Zellulosefasern.

**5.** Verwendung der Färbepräparationen gemäß Ansprüchen 1, 2 oder 3 zum Färben von Polyesterfasern oder Mischungen aus Polyesterfasern und Zellulosefasern nach dem HT-Ausziehverfahren oder Thermosolverfahren.

**6.** Verwendung der Färbepräparationen gemäß Ansprüchen 1, 2 oder 3 zum Bedrucken von Polyesterfasern oder Mischungen aus Polyesterfasern und Zellulosefasern unter Anwendung von HT-Dampf.

**Patentansprüche für folgenden Vertragsstaat : ES**

**1.** Verfahren zur Herstellung von Färbepräparationen in fester oder flüssiger Form durch Vermischen eines oder mehrerer roter Dispersionsfarbstoffe der allgemeinen Formel (1)

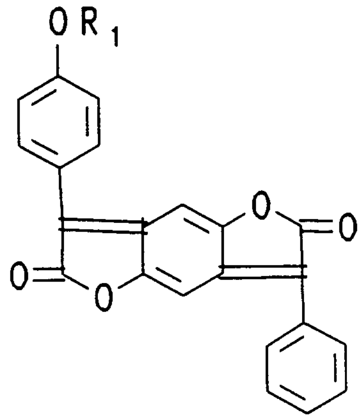

(1)

in welcher $R_1$ eine Alkylgruppe von 1 bis 4 Kohlenstoffatomen bedeutet, und eines oder mehrerer roter Dispersionsfarbstoffe der allgemeinen Formel (2)

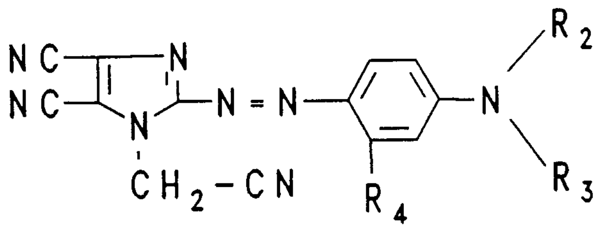

(2)

in welcher $R_2$ und $R_3$ unabhängig voneinander die Gruppe $-CH_2-CH_2-CH_2-COOCH_3$ oder $-CH_2-CH_2-CH_2-COOC_2H_5$, und $R_4$ ein Wasserstoff-, Chlor- oder Bromatom oder die Methylgruppe bedeuten, eines oder mehrerer anionaktiver oder nichtionischer Dispergiermittel und gegebenenfalls Wasser, wobei, bezogen auf das Mischungsverhältnis der Reinfarbstoffe zueinander, die Farbstoffe der Formel (1) zu 15 bis 85 Gew.-%, die Farbstoffe der Formel (2) zu 85 bis 15 Gew.-% enthalten sind, und die Farbstoffe durch gemeinsame oder separate Nassvermahlung in Gegenwart eines Dispergiermittels in hohe Feinverteilung gebracht werden.

**2.** Verfahren gemäß Anspruch 1, dadurch gekennzeichnet, daß die Färbepräparationen einen oder mehrere rote Dispersionsfarbstoffe der allgemeinen Formel (3)

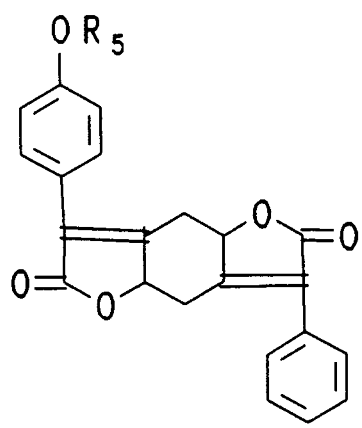

(3)

in welcher $R_5$ eine Alkylgruppe von 1 bis 4 Kohlenstoffatomen bedeutet, und einen oder mehrere rote Dispersionsfarbstoffe der allgemeinen Formel (4)

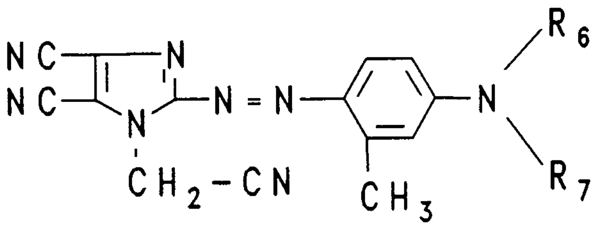

(4)

in welcher $R_6$ eine Ethyl-, n-Propyl- oder n-Butylgruppe und $R_7$ die Gruppe $-CH_2-CH_2-CH_2-COOCH_3$ oder $-CH_2-CH_2-CH_2-COOC_2H_5$ bedeuten, enthalten, wobei, bezogen auf das Mischungsverhältnis der Reinfarbstoffe zueinander, die Farbstoffe der Formel (3) zu 30 bis 70 Gew.-%, die Farbstoffe der Formel (4) zu 70 bis 30 Gew.-% vorliegen.

**3.** Verfahren gemäß Anspruch 1, dadurch gekennzeichnet, daß die Färbepräparationen den roten Dispersionsfarbstoff der Formel (5)

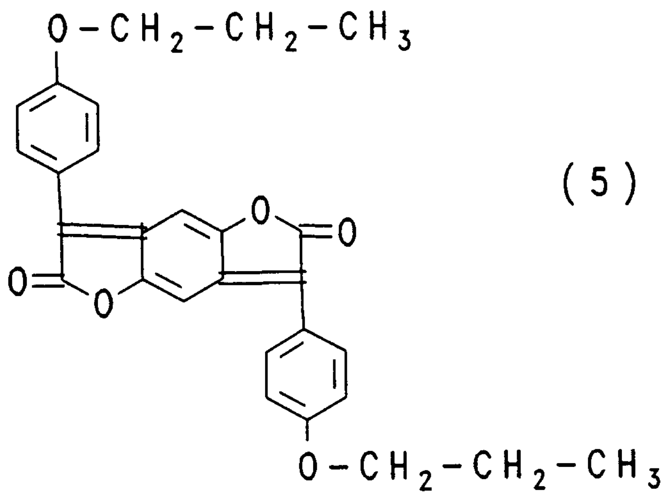

(5)

und den roten Dispersionsfarbstoff der Formel (6)

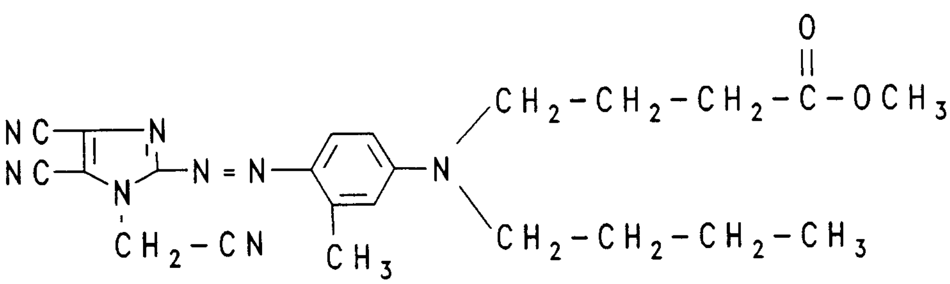

(6)

enthalten, wobei, bezogen auf das Mischungsverhältnis der beiden Reinfarbstoffe (5) und (6) zueinander, Farbstoff (5) zu 30 bis 70 Gew.-%, Farbstoff (6) zu 70 bis 30 Gew.-% vorliegt.

**4.** Verwendung der nach den Ansprüchen 1, 2 oder 3 hergestellten Färbepräparationen zum Färben oder Bedrucken von Polyesterfasern oder Mischungen aus Polyesterfasern und Zellulosefasern.

**5.** Verwendung der nach den Ansprüchen 1, 2 oder 3 hergestellten Färbepräparationen zum Färben von Polyesterfasern oder Mischungen aus Polyesterfasern und Zellulosefasern nach dem HT-Ausziehverfahren oder Thermosolverfahren.

**6.** Verwendung der nach den Ansprüchen 1, 2 oder 3 hergestellten Färbepräparationen zum Bedrucken von Polyesterfasern oder Mischungen aus Polyesterfasern und Zellulosefasern unter Anwendung von HT-Dampf.

## Claims

### Claims for the following Contracting States : BE, CH, DE, FR, GB, IT, LI

**1.** Dyeing formulations in solid or liquid form, comprising one or more red disperse dyes of the general formula (1)

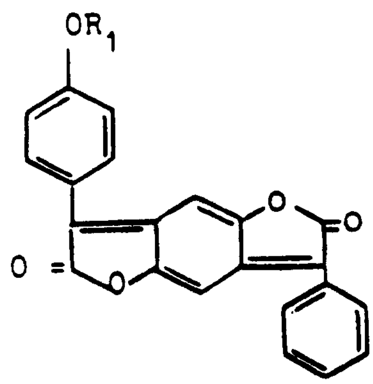

(1)

where $R_1$ denotes an alkyl group of 1 to 4 carbon atoms, and one or more red disperse dyes of the general formula (2)

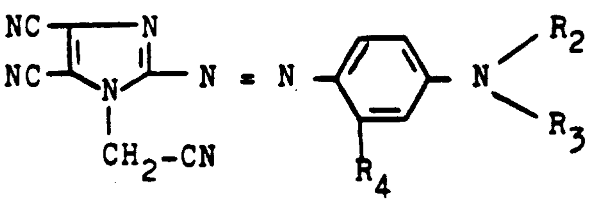

(2)

where $R_2$ and $R_3$ denote independently of each other the group $-CH_2-CH_2-CH_2-COOCH_3$ or $-CH_2-CH_2-CH_2-COOC_2H_5$ and $R_4$ denotes a hydrogen, chlorine or bromine atom or a methyl group, one or more anion-active or nonionic dispersing agents and optionally water, wherein, based on the mixing ratio of the pure dyes to one another, the dyes of the formula (1) are present in a proportion of 15 to 85 percent by weight and the dyes of the formula (2) in a proportion of 85 to 15 percent by weight, and the dyes have been brought into a state of extremely fine division by conjoint or separate wet grinding in the presence of a dispersing agent.

**2.** The dyeing formulation as claimed in claim 1, comprising one or more red disperse dyes of the formula (3)

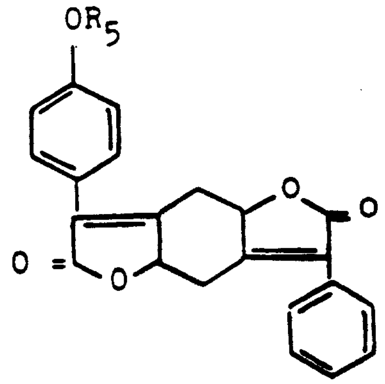

(3)

where $R_5$ denotes an alkyl group of 1 to 4 carbon atoms, and one or more red disperse dyes of the general formula (4)

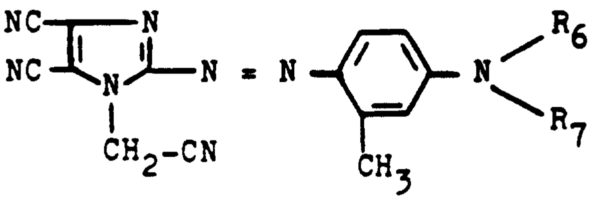

(4)

where $R_6$ denotes an ethyl, n-propyl or n-butyl group and $R_7$ denotes the group $-CH_2-CH_2-CH_2-COOCH_3$ or $-CH_2-CH_2-CH_2-COOC_2H_5$, wherein, based on the mixing ratio of the pure dyes to one another, the dyes of the formula (3) are present in a proportion of 30 to 70 percent by weight and the dyes of the formula (4) in a proportion of 70 to 30 percent by weight.

**3.** The dyeing formulation as claimed in claim 1, comprising the red disperse dye of the formula (5)

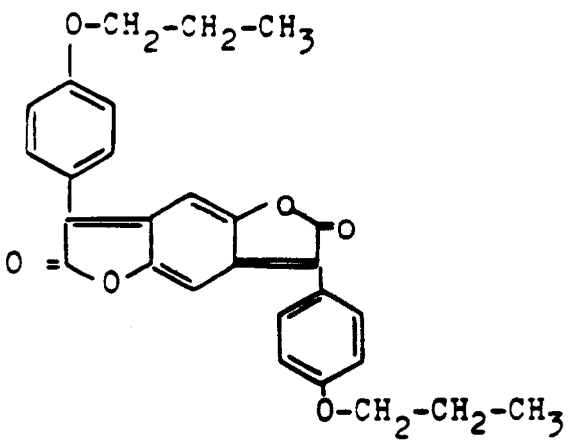

(5)

and the red disperse dye of the formula (6)

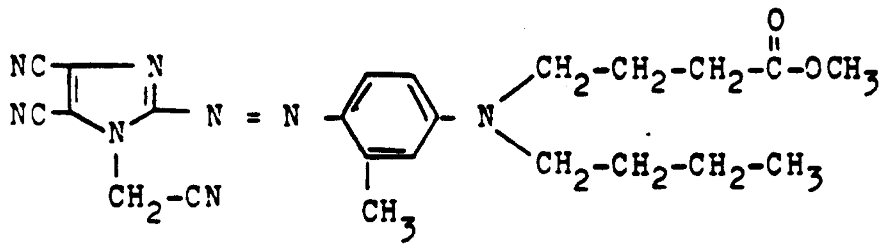

(6)

wherein, based on the mixing ratio of the two pure dyes (5) and (6) to each other, dye (5) is present in a proportion of 30 to 70 percent by weight and dye (6) in a proportion of 70 to 30 percent by weight.

**4.** The use of the dyeing formulation as claimed in claims 1, 2 or 3 for dyeing or printing polyester fibers or mixtures of polyester fibers and cellulose fibers.

**5.** The use of the dyeing formulation as claimed in claims 1, 2 or 3 for dyeing polyester fibers or mixtures of polyester fibers and cellulose fibers by the HT exhaust method or by the thermosol method.

**6.** The use of the dyeing formulation as claimed in claims 1, 2 or 3 for printing polyester fibers or mixtures of polyester fibers and cellulose fibers employing HT steam.

**Claims for the following Contracting State : ES**

**1.** A process for preparing a dyeing formulation in solid or liquid form, by mixing one or more red disperse dyes of the general formula (1)

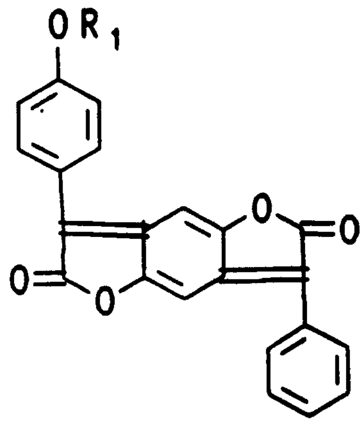

(1)

where $R_1$ denotes an alkyl group of 1 to 4 carbon atoms, and one or more red disperse dyes of the general formula (2)

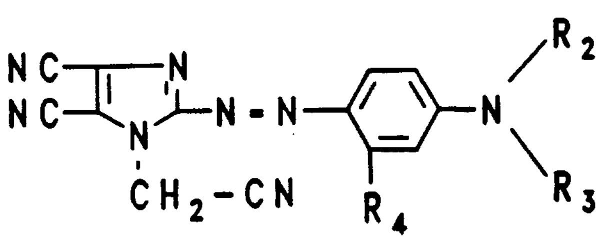

(2)

where $R_2$ and $R_3$ denote independently of each other the group $-CH_2-CH_2-CH_2-COOCH_3$ or $-CH_2-CH_2-CH_2-COOC_2H_5$ and $R_4$ denotes a hydrogen, chlorine or bromine atom or a methyl group, one or more anion-active or nonionic dispersing agents and optionally water, wherein, based on the mixing ratio of

the pure dyes to one another, the dyes of the formula (1) are present in a proportion of 15 to 85 percent by weight and the dyes of the formula (2) in a proportion of 85 to 15 percent by weight, and the dyes are brought into a state of extremely fine division by conjoint or separate wet grinding in the presence of a dispersing agent.

2. The process as claimed in claim 1, wherein the dyeing formulation comprises one or more red disperse dyes of the general formula (3)

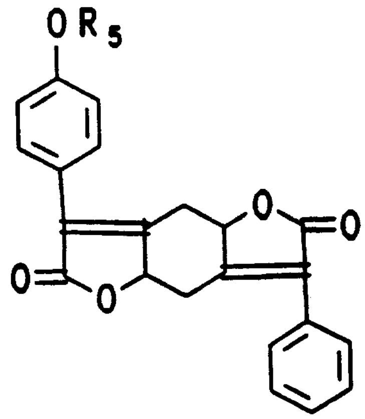

(3)

where $R_5$ denotes an alkyl group of 1 to 4 carbon atoms, and one or more red disperse dyes of the general formula (4)

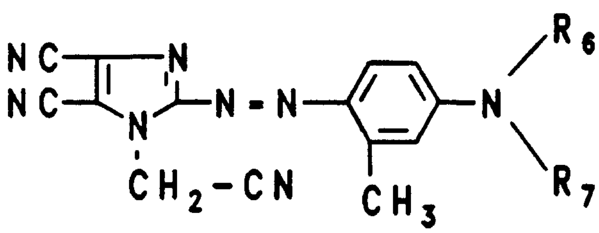

(4)

where $R_6$ denotes an ethyl, n-propyl or n-butyl group and $R_7$ denotes the group $-CH_2-CH_2-CH_2-COOCH_3$ or $-CH_2-CH_2-CH_2-COOC_2H_5$, such that, based on the mixing ratio of the pure dyes to one another, the dyes of the formula (3) are present in a proportion of 30 to 70 percent by weight and the dyes of the formula (4) in a proportion of 70 to 30 percent by weight.

3. The process as claimed in claim 1, wherein the dyeing formulation comprises the red disperse dye of the formula (5)

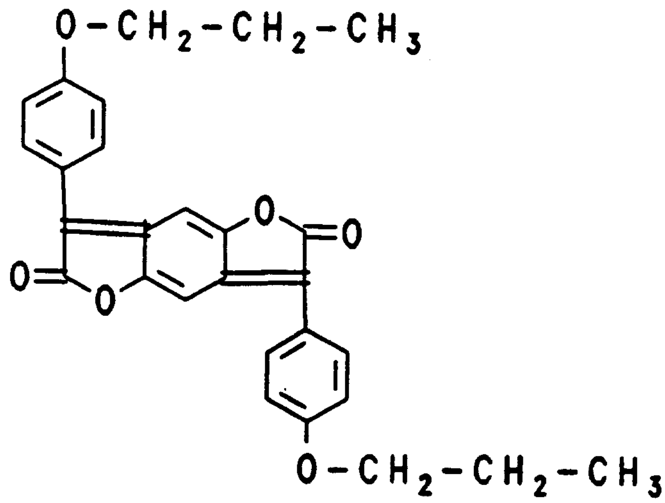

(5)

and the red disperse dye of the formula (6)

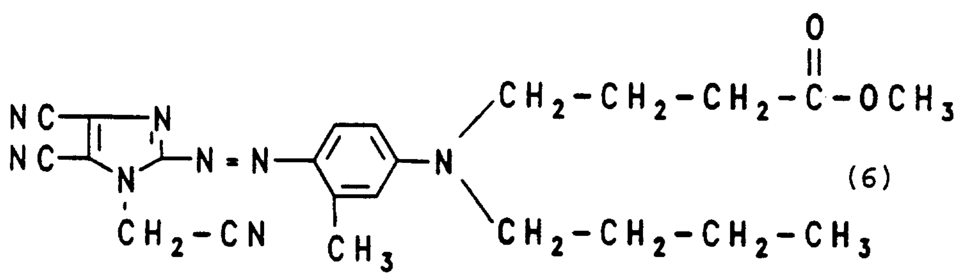

(6)

such that, based on the mixing ratio of the two pure dyes (5) and (6) to each other, dye (5) is present in a proportion of 30 to 70 percent by weight and dye (6) in a proportion of 70 to 30 percent by weight.

**4.** The use of the dyeing formulation prepared as claimed in claims 1, 2 or 3 for dyeing or printing polyester fibers or mixtures of polyester fibers and cellulose fibers.

**5.** The use of the dyeing formulation prepared as claimed in claims 1, 2 or 3 for dyeing polyester fibers or mixtures of polyester fibers and cellulose fibers by the HT exhaust method or by the thermosol method.

**6.** The use of the dyeing formulation prepared as claimed in claims 1, 2 or 3 for printing polyester fibers or mixtures of polyester fibers and cellulose fibers employing HT steam.

**Revendications**
**Revendications pour les Etats contractants suivants : BE, CH, DE, FR, GB, IT, LI**

**1.** Préparations colorantes sous forme solide ou liquide, contenant un ou plusieurs colorants de dispersion rouges de formule générale (1)

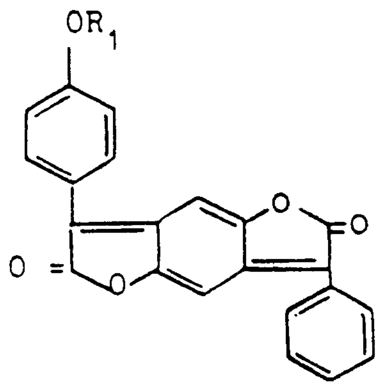

(1)

dans laquelle $R_1$ est un groupe alkyle ayant de 1 à 4 atomes de carbone, et un ou plusieurs colorants de dispersion rouges de formule générale (2)

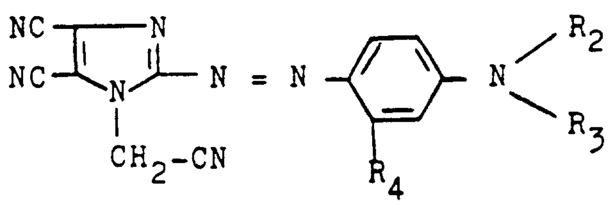

(2)

dans laquelle $R_2$ et $R_3$, indépendamment l'un de l'autre, sont chacun le groupe $-CH_2-CH_2-CH_2-COOCH_3$ ou $-CH_2-CH_2-CH_2-COOC_2H_5$, et $R_4$ est un atome d'hydrogène, de chlore ou de brome ou le groupe méthyle, un ou plusieurs dispersants anioniques ou non ioniques et éventuellement de l'eau, les colorants de formule (1) comptant pour 15 à 85 % en poids et les colorants de formule (2) pour 85 à 15 % en poids du mélange des colorants purs, les colorants ayant été mis en dispersion très fine par broyage par voie humide, commun ou distinct, en présence d'un dispersant.

**2.** Préparations colorantes selon la revendication 1, caractérisées en ce qu'elles contiennent un ou plusieurs colorants de dispersion rouges de formule générale (3)

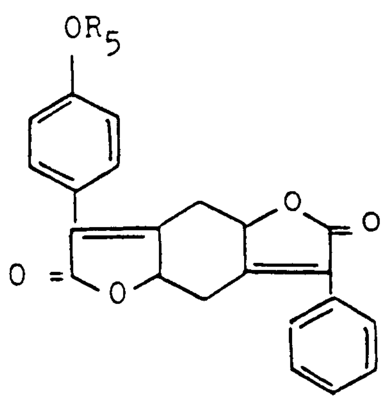

(3)

dans laquelle $R_5$ est un groupe alkyle ayant de 1 à 4 atomes de carbone, et un ou plusieurs colorants de dispersion rouges de formule générale (4)

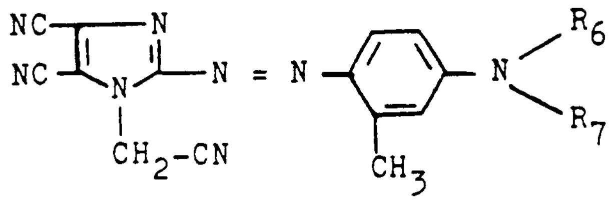

(4)

dans laquelle $R_6$ est un groupe éthyle, n-propyle ou n-butyle, et $R_7$ est le groupe $-CH_2-CH_2-CH_2-COOCH_3$ ou $-CH_2-CH_2-CH_2-COOC_2H_5$, les colorants de formule (3) comptant pour 30 à 70 % en poids et les colorants de formule (4) pour 70 à 30 % en poids du mélange des colorants purs.

3. Préparations colorantes selon la revendication 1, caractérisées en ce qu'elles contiennent le colorant de dispersion rouge de formule (5)

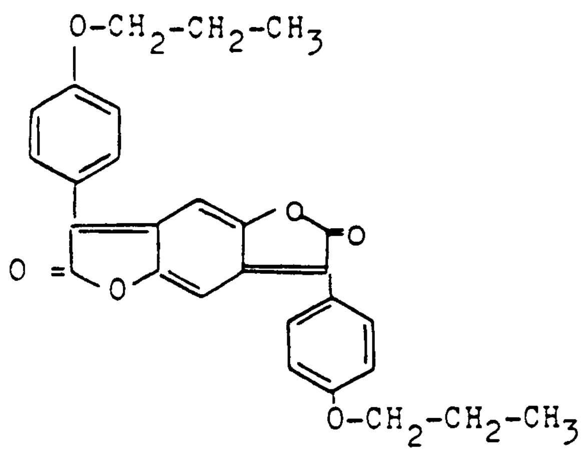

(5)

et le colorant de dispersion rouge de formule (6)

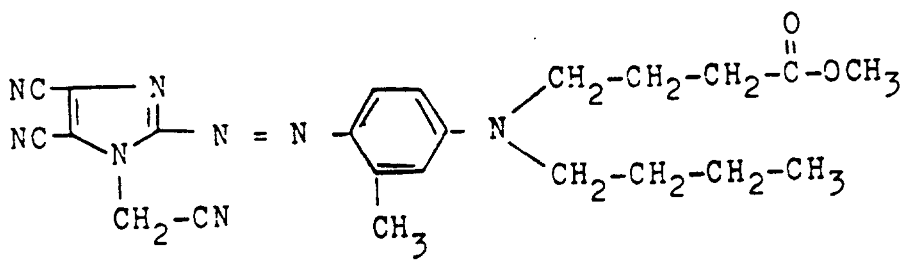

(6)

le colorant (5) comptant pour 30 à 70 % en poids et le colorant (6) pour 70 à 30 % en poids du mélange des deux colorants purs (5) et (6).

4. Utilisation des préparations colorantes selon les revendications 1, 2 ou 3, pour teindre ou imprimer des fibres de polyester ou des mélanges de fibres de polyester et de fibres de cellulose.

5. Utilisation des préparations colorantes selon les revendications 1, 2 ou 3 pour teindre des fibres de polyester ou des mélanges de fibres de polyester et de fibres de cellulose par le procédé par épuisement HT ou par le procédé de thermosolage.

6. Utilisation des préparations colorantes selon les revendications 1, 2 ou 3 pour imprimer des fibres de polyester ou des mélanges de fibres de polyester et des fibres de cellulose, par utilisation de vapeur HT.

**Revendications pour l'Etat contractant suivant : ES**

1. Procédé pour préparer des préparations colorantes sous forme solide ou liquide, contenant un ou plusieurs colorants de dispersion rouges de formule générale (1)

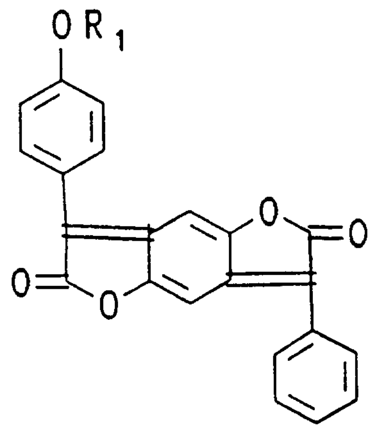

(1)

dans laquelle $R_1$ est un groupe alkyle ayant de 1 à 4 atomes de carbone, et un ou plusieurs colorants de dispersion rouges de formule générale (2)

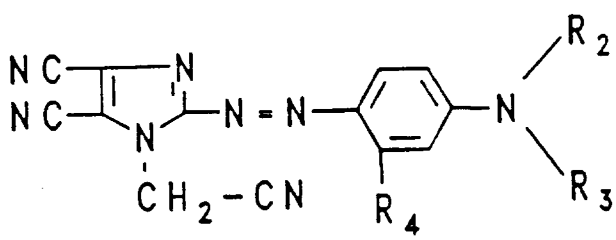

(2)

dans laquelle $R_2$ et $R_3$, indépendamment l'un de l'autre, sont chacun le groupe $-CH_2-CH_2-CH_2-COOCH_3$ ou $-CH_2-CH_2-CH_2-COOC_2H_5$, et $R_4$ est un atome d'hydrogène, de chlore ou de brome ou encore le groupe méthyle, un ou plusieurs dispersants anioniques ou non ioniques et éventuellement de l'eau, les colorants de formule (1) comptant pour 15 à 85 % en poids et les colorants de formule (2) pour 85 à 15 % en poids du mélange des colorants purs, les colorants ayant été mis en dispersion très fine par broyage par voie humide, commun ou distinct, en présence d'un dispersant.

2. Procédé selon la revendication 1, caractérisé en ce que les préparations colorantes contiennent un ou plusieurs colorants de dispersion rouges de formule générale (3)

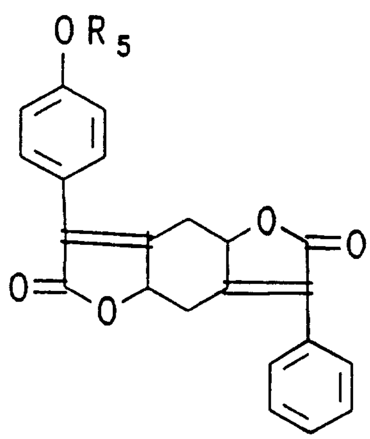

(3)

dans laquelle $R_5$ est un groupe alkyle ayant de 1 à 4 atomes de carbone, et un ou plusieurs colorants de dispersion rouges de formule générale (4)

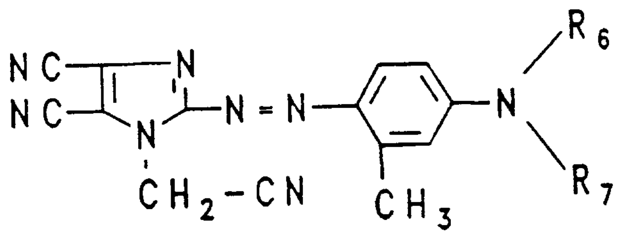

(4)

dans laquelle $R_6$ est un groupe éthyle, n-propyle ou n-butyle, et $R_7$ est le groupe $-CH_2-CH_2-CH_2-COOCH_3$ ou $-CH_2-CH_2-CH_2-COOC_2H_5$, les colorants de formule (3) comptant pour 30 à 70 % en poids et les colorants de formule (4) pour 70 à 30 % en poids du mélange des colorants purs.

3. Procédé selon la revendication 1, caractérisé en ce que les préparations colorantes contiennent le colorant de dispersion rouge de formule (5)

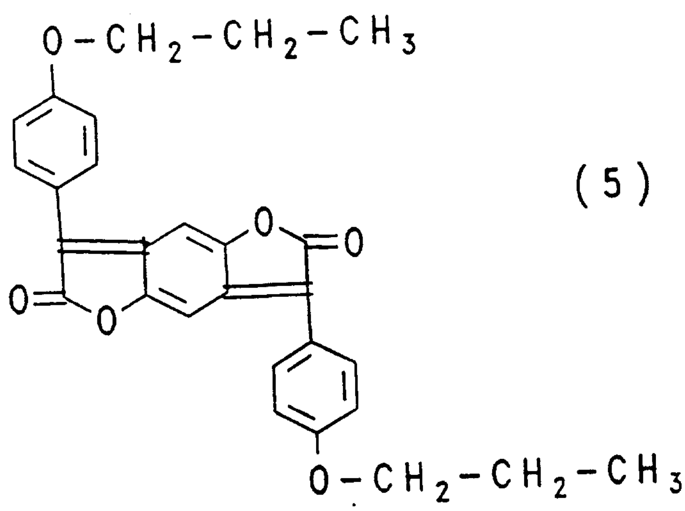

(5)

et le colorant de dispersion rouge de formule (6)

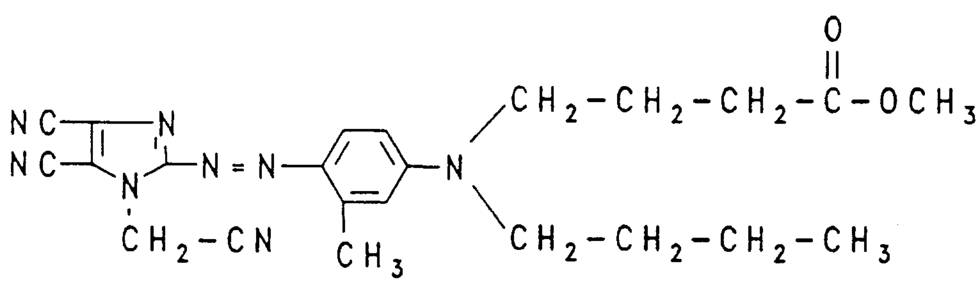

(6)

le colorant (5) comptant pour 30 à 70 % en poids et le colorant (6) pour 70 à 30 % en poids du mélange des deux colorants purs (5) et (6).

4. Utilisation des préparations colorantes selon les revendications 1, 2 ou 3, pour teindre ou imprimer des fibres de polyester ou des mélanges de fibres de polyester et de fibres de cellulose.

5. Utilisation des préparations colorantes selon les revendications 1, 2 ou 3 pour teindre des fibres de polyester ou des mélanges de fibres de polyester et de fibres de cellulose par le procédé par

épuisement HT ou par le procédé de thermosolage.

**6.** Utilisation des préparations colorantes selon les revendications 1, 2 ou 3 pour imprimer des fibres de polyester ou des mélanges de fibres de polyester et des fibres de cellulose, par utilisation de vapeur HT.